# FASCICULE DE BREVET EUROPEEN

(11) **EP 4 416 829 B1**
(45) Date de publication et mention de la délivrance du brevet: **05.11.2025**
(21) Numéro de dépôt: 22801510.3
(22) Date de dépôt: 13.10.2022
(51) Int. Cl.: H02K 3/24, H02K 1/32, H02K 3/52, H02K 9/19

(54) **ROTOR BOBINÉ POUR MOTEUR ÉLECTRIQUE MUNI D'UN CIRCUIT DE REFROIDISSEMENT**
BEWICKELTER ROTOR FÜR EINEN ELEKTROMOTOR MIT KÜHLKREISLAUF
WOUND ROTOR FOR AN ELECTRIC MOTOR PROVIDED WITH A COOLING CIRCUIT

(30) Priorité: 15.10.2021 FR 2110962
(43) Date de publication de la demande: 21.08.2024
(73) Titulaire: NOVARES France, 78140 Vélizy-Villacoublay (FR)
(72) Inventeur: LEDIEU, Cédric, 62144 Mont Saint Eloi (FR); MILLUY, Ludovic, 62860 Ecourt St Quentin (FR)
(74) Mandataire: Germain Maureau
(86) Numéro de dépôt international: PCT/FR2022/051928
(87) Numéro de publication internationale: WO 2023/062322

(56) Documents cités:
- CN-A- 111 769 673
- DE-A1- 102016 205 653
- US-A1- 2016 211 713
- US-A1- 2020 106 342

## Description

L'invention concerne un rotor bobiné pour moteur électrique agencé pour permettre une meilleure évacuation de la chaleur générée lors de son fonctionnement. L'invention concerne également un moteur électrique comprenant un tel rotor bobiné.

De manière générale, les moteurs électriques actuels comportent un rotor solidaire d'un arbre et un stator qui entoure le rotor. Le stator est monté dans un carter qui comporte des roulements pour le montage en rotation de l'arbre. Le stator comporte généralement un corps constitué par un empilage de tôles formant une couronne, dont la face intérieure est pourvue de dents délimitant deux à deux une pluralité d'encoches ouvertes vers l'intérieur du corps de stator et destinées à recevoir des enroulements de phase. Ces enroulements de phase traversent les encoches du corps de stator et forment des chignons faisant saillie de part et d'autre du corps de stator. Les enroulements de phase peuvent par exemple être constitués d'une pluralité de segments de conducteur en forme de U, les extrémités libres de deux segments adjacents étant reliées entre elles par soudage. Le rotor peut être de plusieurs types. Une configuration possible consiste en un rotor bobiné constitué par un paquet de tôles monté coaxialement sur l'arbre de rotor, ledit paquet de tôles présentant plusieurs paires de pôles, chaque pôle étant espacé d'un pôle adjacent par un espace interpolaire, et des bobinages entourant les pôles du paquet de tôles et étant reliés à un collecteur formé généralement par des bagues en cuivre venant en face de balais pour l'alimentation des bobinages.

Lors du fonctionnement du moteur, les courants circulant à travers les enroulements de phase du stator et les bobinages du rotor génèrent une chaleur importante qui doit être évacuée. Pour refroidir le moteur, il existe actuellement plusieurs solutions. L'une de ces solutions consiste à projeter un fluide de refroidissement à l'intérieur du moteur de telle sorte qu'il soit en contact avec les enroulements de phase du stator et les bobinages du rotor. Cette solution présente toutefois l'inconvénient de ne pas projeter le fluide de refroidissement directement sur les enroulements de phase du stator et les bobinages du rotor ce qui génère une surconsommation de fluide de refroidissement pour permettre une bonne évacuation de la chaleur générée par ces enroulements de phase et ces bobinages. Une autre solution envisageable, décrite dans le document US 2020/106342 A1, consiste à équiper un moteur électrique d'un rotor bobiné conforme au préambule de la revendication 1.

L'invention vise donc à proposer un rotor bobiné et un moteur électrique comprenant un tel rotor agencés pour permettre une meilleure évacuation de la chaleur générée lors de son fonctionnement, en refroidissant au plus près les bobinages du rotor et/ou les chignons du stator, et ne présentant pas les inconvénients des solutions existantes décrites précédemment.

A cet effet, l'invention concerne un rotor bobiné pour moteur électrique comprenant :
- un arbre de rotor monté rotatif autour d'un axe ;
- un paquet de tôles monté coaxialement sur l'arbre de rotor, ledit paquet de tôles s'étendant entre une face latérale avant et une face latérale arrière et présentant une alternance de pôles et d'espaces interpolaires ;
- un flasque de bobinage avant et un flasque de bobinage arrière montés coaxialement sur l'arbre de rotor et agencés axialement de part et d'autre du paquet de tôles de telle sorte à être contigus respectivement aux faces latérales avant et arrière du paquet de tôles, lesdits flasques de bobinage avant et arrière présentant chacun une série de branches radiales en forme de T, chacune desdites branches radiales étant alignée axialement avec un des pôles du paquet de tôles et présentant, de préférence, un profil similaire ou identique à celui dudit pôle dans un plan perpendiculaire à l'axe de l'arbre ;
- des bobinages entourant partiellement les pôles du paquet de tôles et les branches radiales des flasques de bobinage avant et arrière ;

dans lequel l'arbre est muni d'au moins un canal interne de circulation d'un fluide de refroidissement, dit canal d'entrée de fluide, et en ce que le flasque de bobinage avant et/ou le flasque de bobinage arrière est traversé par plusieurs canaux radiaux de sortie de fluide orientés radialement par rapport à l'axe de l'arbre et à l'intérieur desquels peut circuler un fluide de refroidissement, chacun desdits canaux radiaux de sortie de fluide étant en communication fluidique avec ledit canal d'entrée de fluide et débouchant au niveau d'une ouverture radiale de sortie de fluide située à la périphérie externe dudit flasque de bobinage avant et/ou dudit flasque de bobinage arrière,
caractérisé par le fait que le flasque de bobinage avant, respectivement arrière, est traversé également par une pluralité de canaux intermédiaires, chacun desdits canaux intermédiaires étant orienté orthogonalement à l'un des canaux radiaux de sortie de fluide et débouchant, à une première extrémité, dans ledit canal radial de sortie de fluide et, à une deuxième extrémité, dans un canal axial de sortie de fluide débouchant au niveau d'une ouverture axiale de sortie de fluide située sur une face latérale externe dudit flasque de bobinage avant, respectivement arrière.

Ainsi configuré, le rotor de l'invention pourra avantageusement être refroidi au moyen d'un fluide de refroidissement circulant à l'intérieur de l'arbre de rotor puis à l'intérieur du flasque de bobinage avant et/ou arrière, ledit fluide de refroidissement pouvant ensuite être projeté directement sur les chignons du stator au niveau des ouvertures radiales de sortie de fluide, permettant ainsi une meilleure évacuation de chaleur du moteur électrique intégrant le rotor de l'invention.

Le rotor de l'invention pourra également comprendre une ou plusieurs des caractéristiques suivantes :
- l'arbre est muni d'un premier canal interne de circulation d'un fluide de refroidissement, dit premier canal d'entrée de fluide, et d'un deuxième canal interne de circulation d'un fluide de refroidissement, dit deuxième canal d'entrée de fluide, et le flasque de bobinage avant, respectivement le flasque de bobinage arrière, est traversé par plusieurs canaux radiaux de sortie de fluide orientés radialement par rapport à l'axe de l'arbre et à l'intérieur desquels peut circuler un fluide de refroidissement, chacun desdits canaux radiaux de sortie de fluide étant en communication fluidique avec le premier canal d'entrée de fluide, respectivement le deuxième canal d'entrée de fluide, et débouchant au niveau d'une ouverture radiale de sortie de fluide située à la périphérie externe dudit flasque de bobinage avant, respectivement dudit flasque de bobinage arrière.
- l'arbre comprend une portion d'extrémité avant et une portion d'extrémité arrière séparée de la portion d'extrémité avant par une portion centrale, la portion d'extrémité avant, respectivement la portion d'extrémité arrière, étant traversée par un trou borgne aligné selon l'axe de l'arbre, ledit trou borgne formant le premier canal d'entrée de fluide, respectivement le deuxième canal d'entrée de fluide.
- l'arbre comprend une portion d'extrémité avant et une portion d'extrémité arrière séparée de la portion d'extrémité avant par une portion centrale, la portion centrale et au moins partiellement les portions d'extrémité avant et arrière étant traversées par un trou borgne aligné selon l'axe de l'arbre, ledit trou borgne formant le canal d'entrée de fluide.
- plusieurs trous de liaison orientés radialement par rapport à l'axe de l'arbre sont formés à l'intérieur de la portion d'extrémité avant, respectivement de la portion d'extrémité arrière, de manière à déboucher, d'un côté, dans le canal d'entrée de fluide, ou respectivement dans les premier et deuxième canaux d'entrée de fluide, et, de l'autre côté, dans les canaux radiaux de sortie de fluide.
- chacun des canaux radiaux de sortie de fluide traverse une des branches radiales du flasque de bobinage avant, respectivement arrière.
- le flasque de bobinage avant, respectivement arrière, possède une face latérale interne en contact avec la face latérale avant, respectivement arrière, du paquet de tôles, ladite face latérale interne étant munie d'une cavité dans laquelle vient se loger un couvercle, ladite cavité étant configurée pour former, en combinaison avec ledit couvercle, une première section des canaux radiaux de sortie de fluide, ainsi que les canaux intermédiaires et les canaux axiaux de sortie de fluide.
- la cavité comprend une partie centrale de forme annulaire, qui s'étend radialement depuis une zone centrale évidée du flasque de bobinage avant, respectivement arrière, ladite zone centrale étant configurée pour loger partiellement l'arbre du rotor, et de plusieurs extensions radiales s'étendant radialement depuis ladite partie centrale, chacune des extensions radiales étant alignée avec une des branches radiales du flasque de bobinage avant, respectivement arrière.
- la cavité est délimitée par une paroi de fond et par plusieurs parois latérales orientées perpendiculairement à ladite paroi de fond, ladite paroi de fond étant munie de premières rainures orientées radialement par rapport à l'axe de l'arbre et de deuxièmes rainures orientées de manière orthoradiale par rapport à l'axe de l'arbre, lesdites premières et deuxièmes rainures formant respectivement, en combinaison avec des rainures correspondantes du couvercle, la première section des canaux radiaux de sortie de fluide et les canaux intermédiaires.
- plusieurs parois latérales, qui sont orientées radialement par rapport à l'axe de l'arbre, sont munies de troisièmes rainures orientées parallèlement à l'axe de l'arbre, lesdites troisièmes rainures formant, en combinaison avec des rainures correspondantes du couvercle, les canaux axiaux de sortie de fluide.
- la cavité est configurée pour former des logements disposés radialement autour de la partie centrale, chacun des logements possédant une forme spécifique et étant destiné à recevoir un élément de liaison correspondant du couvercle possédant une forme complémentaire à celle dudit logement, ladite forme spécifique et ladite forme complémentaire étant configurées pour empêcher tout déplacement relatif entre le couvercle et le flasque de bobinage avant, respectivement arrière, selon une direction radiale, sécurisant ainsi le couplage du couvercle sur le flasque de bobinage avant, respectivement arrière.
- les logements de la cavité possèdent une forme en queue d'aronde.
- les flasques de bobinage avant et arrière sont constitués d'un matériau choisi parmi l'aluminium ou une matière plastique.

L'invention concerne également un moteur électrique comprenant un rotor bobiné tel que défini ci-dessus et un stator annulaire qui entoure le rotor de manière coaxiale à l'arbre, des chignons faisant saillie axialement de part et d'autre du stator, les ouvertures radiales de sortie de fluide, à travers lesquelles sort le fluide de refroidissement des flasques de bobinage avant et/ou arrière, étant alignées axialement avec les chignons de manière à permettre un refroidissement desdits chignons par l'intermédiaire dudit fluide de refroidissement.

L'invention sera davantage comprise à la lecture de la description non limitative qui va suivre, faite en référence aux figures ci-annexées.
[Fig. 1] est une vue en perspective d'un moteur électrique équipé d'un rotor bobiné selon l'invention, le moteur étant vu depuis son côté avant,
[Fig. 2] est une vue similaire à la figure 1, le moteur étant vu depuis son côté arrière,
[Fig. 3] est une vue en coupe longitudinale du moteur des figures 1 et 2,
[Fig. 4] est une vue en perspective du rotor bobiné équipant le moteur des figures 1 et 2,
[Fig. 5a] est une vue en coupe longitudinale du rotor de la figure 4,
[Fig. 5b] est une vue en coupe longitudinale d'un rotor selon une variante de réalisation de l'invention,
[Fig. 6] est une vue axiale d'un des flasques de bobinage équipant le rotor de la figure 4,
[Fig. 7] est une vue en perspective de la face interne du flasque représenté sur la figure 6, le couvercle ayant été retiré,
[Fig. 8] est une vue en perspective de la face externe du flasque représenté sur la figure 6,
[Fig. 9] est une vue en perspective de la face externe du couvercle du flasque représenté sur la figure 6,
[Fig. 10] est une vue en perspective de la face interne du couvercle du flasque représenté sur la figure 6.

Dans l'ensemble de la description et dans les revendications, les termes « axial » et « radial » et leurs dérivés sont définis par rapport à l'axe de rotation du rotor. Ainsi, une orientation axiale se rapporte à une orientation parallèle à l'axe de rotation du rotor et une orientation radiale se rapporte à une orientation perpendiculaire à l'axe de rotation du rotor. Une orientation orthoradiale se rapporte à une orientation perpendiculaire à une orientation radiale dans un plan perpendiculaire à l'axe de rotation du rotor. Par ailleurs, par convention, les termes « avant » et « arrière » font référence à des positions séparées le long de l'axe de rotation du rotor. En particulier, l'extrémité « avant » de l'arbre du rotor correspond à l'extrémité de l'arbre sur laquelle peut être fixé(e) une poulie, un pignon, une cannelure destiné(e) à transmettre le mouvement de rotation du rotor à tout autre dispositif similaire de transmission de mouvements.

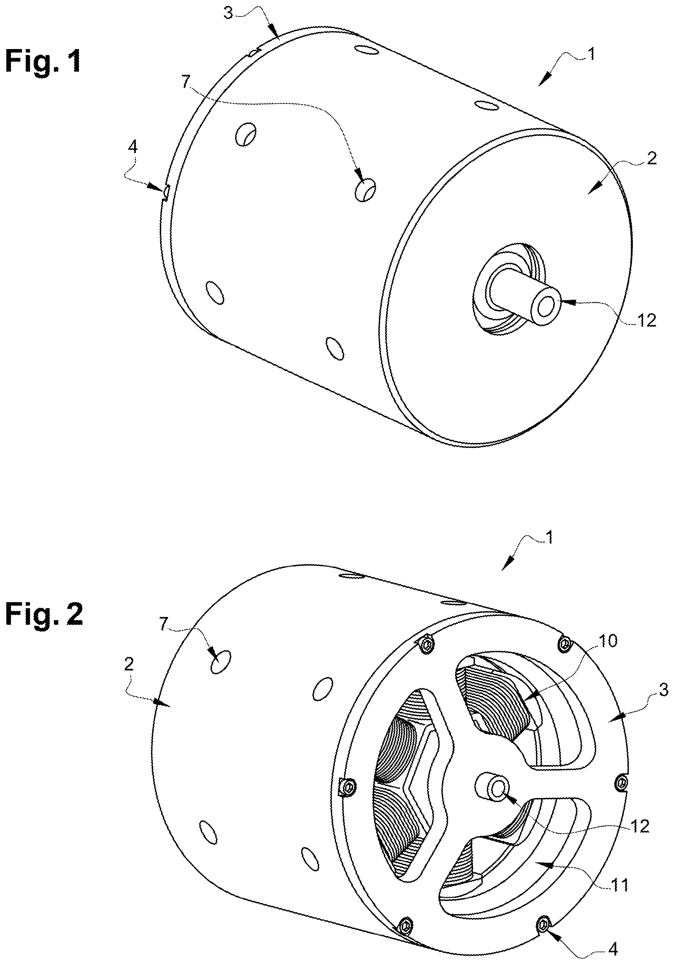

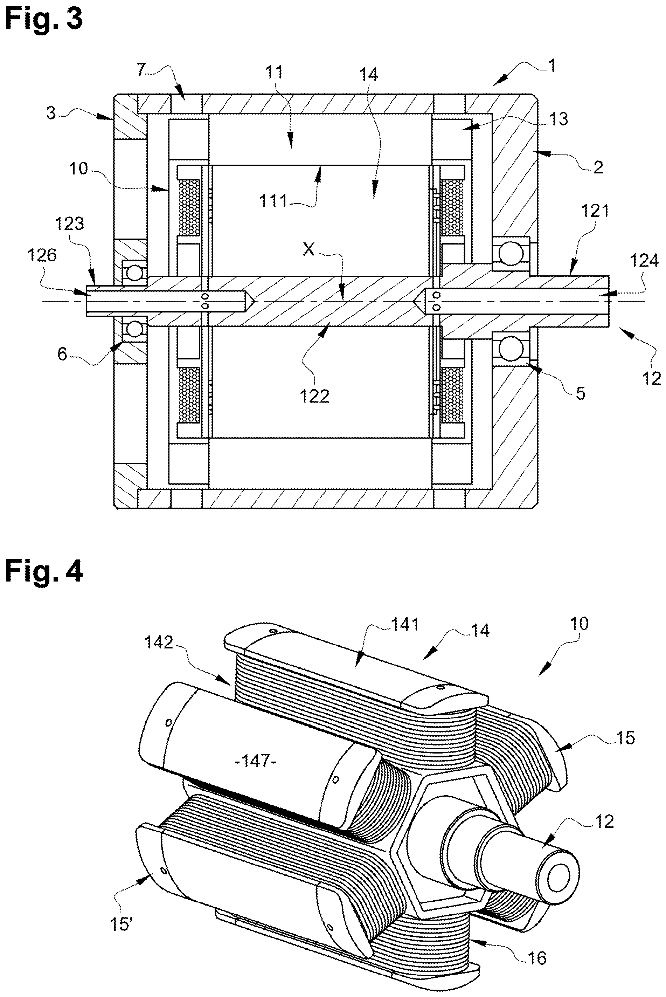

Les figures 1 à 3 représentent un moteur électrique 1 selon l'invention comprenant deux paliers, respectivement un palier avant 2 en forme de cloche et un palier arrière 3 en forme de disque, reliées ensemble au moyens de vis 4, le palier avant 2 logeant un rotor 10 solidaire en rotation d'un arbre 12 et un stator 11 annulaire qui entoure le rotor 10 de manière coaxiale à l'arbre 12. Comme représenté en figure 3, les paliers avant et arrière 2, 3 portent chacun centralement un roulement à billes respectivement 5 et 6 pour le montage en rotation de l'arbre 12. Des chignons 13 font saillie axialement de part et d'autre du stator 11 et sont logés dans l'espace intermédiaire séparant le stator 11 des paliers respectifs 2, 3. Les paliers avant et arrière 2, 3 seront avantageusement constitués de métal. Dans la configuration représentée, le palier avant 2 est muni d'une série d'ouvertures 7 qui serviront pour l'évacuation d'un fluide de refroidissement à l'extérieur du moteur 1. Ce fluide de refroidissement pourra pénétrer à l'intérieur de l'espace interne défini par les paliers avant et arrière 2, 3 via un premier canal interne 124 de circulation, dit premier canal d'entrée de fluide, et un deuxième canal interne 126 de circulation d'un fluide de refroidissement, dit deuxième canal d'entrée de fluide. Les premier et deuxième canaux d'entrée de fluide 124, 126 sont respectivement définis par des trous borgnes alignés selon l'axe X de l'arbre 12 et formé à travers des portions d'extrémité avant 121 et arrière 123 de l'arbre 12, lesdites portions d'extrémités 121, 123 étant séparées par une portion centrale pleine 122.

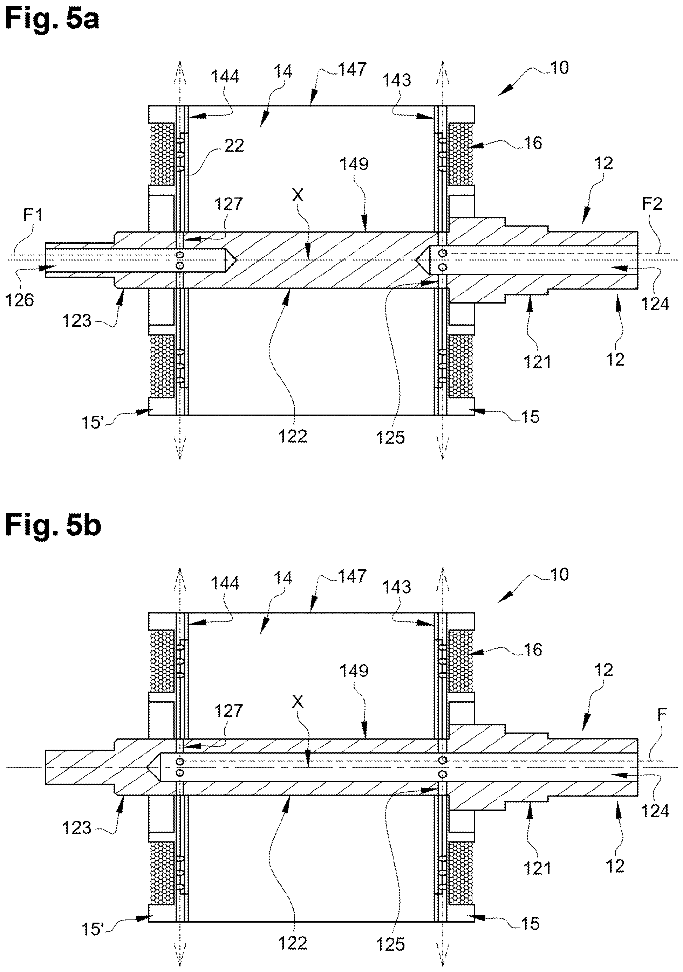

Les figures 4 et 5a représentent un rotor 10 selon un mode particulier de réalisation de l'invention. Le rotor 10 est de type bobiné et comprend notamment un paquet de tôles 14 formé d'un empilement axial de tôles qui s'étendent dans un plan radial perpendiculaire à l'axe X de l'arbre 12. Le paquet de tôles 14 est monté coaxialement sur l'arbre 12. L'arbre 12 pourra être emmanché en force à l'intérieur d'une ouverture centrale du paquet de tôles 14 de manière à lier en rotation le corps du rotor avec l'arbre 12. Le paquet de tôles 14 s'étend entre une face latérale avant 143 et une face latérale arrière 144 et présente une alternance circonférentielle de pôles 141 et d'espaces interpolaires 142. Les espaces interpolaires 142 s'étendent entre deux pôles 141 adjacents et forment des évidements s'étendant sur toute la longueur du paquet de tôles 14, entre les deux pôles adjacents 141. Dans la configuration représentée, les pôles 141 sont au nombre de 6 et sont disposés autour de l'arbre 12 de manière à être régulièrement espacés, deux pôles 141 adjacents étant espacés par un angle de 60° environ. Les pôles 141 s'étendent radialement depuis une partie annulaire du paquet de tôles 14 pourvue d'une ouverture centrale 149 configurée pour loger partiellement l'arbre 12 du rotor. Chaque pôle 141 possède un profil en forme de T dans un plan orthogonal à l'axe X et présente, dans la direction radiale, une section étroite prolongée par une section élargie de forme bombée. La section élargie bombée présente une surface périphérique externe 147 qui, dans la position montée du rotor 10, fait face à une surface périphérique interne 111 du stator 11 (voir figure 3), ladite surface périphérique externe 147 étant espacée de ladite surface périphérique interne 111 par une distance inférieure à 1 mm.

Chaque pôle 141 reçoit un bobinage 16 longitudinal destiné à générer un flux magnétique dans le pôle rotorique. Les bobinages 16 sont enroulés autour des pôles 141 et autour de flasques de bobinage avant 15 et arrière 15' qui enserrent axialement le paquet de tôles 14. Ces flasques 15, 15' sont montés coaxialement sur l'arbre 12 du rotor et agencés axialement de part et d'autre du paquet de tôles 14 de telle sorte à être contigus respectivement aux faces latérales avant et arrière 143, 144 du paquet de tôles 14.

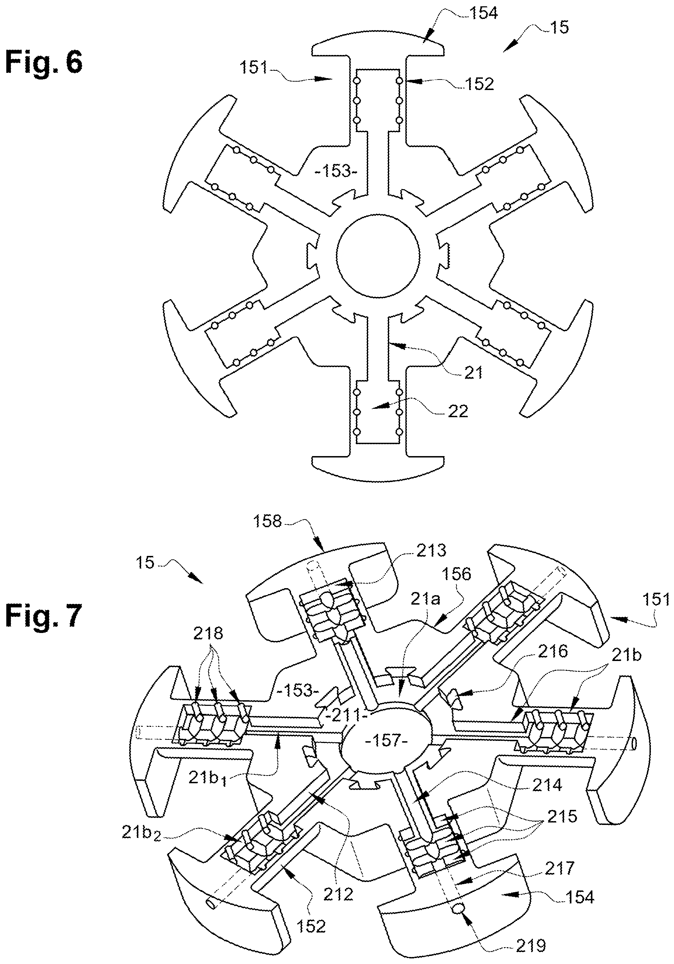

En référence à la figure 6, il est représenté la face latérale interne 153 du flasque de bobinage avant 15 qui est orientée vers le paquet de tôles 14. Les flasques de bobinage avant et arrière 15 et 15' possédant le même profil, les détails de structure donnés ci-dessous en référence à la figure 6 s'appliquent également au flasque de bobinage arrière 15'. Le flasque de bobinage avant 15 possède une série de branches radiales 151 en forme de T. Chacune des branches radiales 151 est alignée axialement avec un des pôles 141 du paquet de tôles 14 et présente, dans la configuration préférentielle représentée sur la figure 4, un profil similaire ou identique à celui du pôle 141 avec lequel elle est alignée dans un plan orthogonal à l'axe X de l'arbre 12. Ainsi, chaque branche radiale 151 présente, dans la direction radiale, une section étroite 152 prolongée par une section élargie 154 de forme bombée.

Le flasque de bobinage avant 15 est par ailleurs muni d'une cavité centrale 21 dans laquelle vient se loger un couvercle avant 22. Comme décrit en détail dans les paragraphes suivants, la cavité 21 et le couvercle avant 22 sont configurés pour former une pluralité de canaux de circulation de fluide à l'intérieur du flasque de bobinage avant 15, ces canaux de circulation de fluide communiquant de manière fluidique avec le premier canal d'entrée de fluide 124 de l'arbre 12 et débouchant notamment au niveau d'ouvertures de sortie de fluide situées à la périphérie externe dudit flasque de bobinage avant 15 et orientées vers les chignons 13 du stator 11 ou vers les bobinages 16. Ainsi, comme représenté sur la figure 5a, un fluide de refroidissement F1 alimenté depuis le premier canal d'entrée de fluide 124 pourra circuler à l'intérieur du flasque de bobinage avant 15 via lesdits canaux de circulation de fluide avant d'être projeté en direction des chignons 13 et/ou des bobinages 16, permettant ainsi un refroidissement efficace du rotor 10 et du stator 11. De la même façon, un fluide de refroidissement F2 alimenté depuis le deuxième canal d'entrée de fluide 126 pourra circuler à l'intérieur de canaux de circulation de fluide similaires formés à l'intérieur du flasque de bobinage arrière 15' avant d'être projeté en direction des chignons 13 dépassant à l'arrière du stator 11, et/ou des bobinages 16 entourant les branches radiales du flasque de bobinage arrière 15'.

Dans une variante de réalisation de l'invention, représentée sur la figure 5b, il sera envisageable de faire pénétrer un fluide de refroidissement F à l'intérieur du rotor 10 via un unique canal interne 124 de circulation, dit canal d'entrée de fluide, débouchant au niveau de la portion d'extrémité avant 121 de l'arbre 12. Dans la configuration représentée, le canal d'entrée de fluide 124 est défini par un trou borgne aligné selon l'axe X de l'arbre 12 et formé successivement à travers la portion d'extrémité avant 121, la portion centrale 122 et une partie de la portion d'extrémité arrière 123 de l'arbre 12. Ainsi, le fluide de refroidissement F alimenté depuis le canal d'entrée de fluide 124 pourra circuler successivement à l'intérieur du flasque de bobinage avant 15 via des canaux de circulation de fluide formés à l'intérieur dudit flasque de bobinage avant 15 avant d'être projeté en direction des chignons 13 et/ou des bobinages 16, puis à l'intérieur de canaux de circulation de fluide similaires formés à l'intérieur du flasque de bobinage arrière 15' avant d'être projeté en direction des chignons 13 dépassant à l'arrière du stator 11, et/ou des bobinages 16 entourant les branches radiales du flasque de bobinage arrière 15'.

Dans une autre configuration possible (non représentée), un unique canal d'entrée de fluide pourra déboucher au niveau de la portion d'extrémité arrière 123 de l'arbre 12. Il pourra être défini par un trou borgne aligné selon l'axe X de l'arbre 12 et formé successivement à travers la portion d'extrémité arrière 123, la portion centrale 122 et une partie de la portion d'extrémité avant 121 de l'arbre 12. Ainsi, le fluide de refroidissement alimenté depuis le canal d'entrée de fluide pourra circuler successivement à l'intérieur du flasque de bobinage arrière 15' via des canaux de circulation de fluide formés à l'intérieur dudit flasque de bobinage arrière 15' avant d'être projeté en direction des chignons 13 et/ou des bobinages 16, puis à l'intérieur de canaux de circulation de fluide similaires formés à l'intérieur du flasque de bobinage avant 15 avant d'être projeté en direction des chignons 13 dépassant à l'avant du stator 11, et/ou des bobinages 16 entourant les branches radiales du flasque de bobinage avant 15.

Dans une autre configuration possible (non représentée), un unique canal d'entrée de fluide pourra déboucher au niveau de la portion d'extrémité avant 121 ou arrière 123 de l'arbre 12. Il pourra être défini par un trou borgne aligné selon l'axe X de l'arbre 12 et formé uniquement à travers la portion d'extrémité avant 121 ou arrière 123. Dans cette configuration, seul le flasque de bobinage avant 15, ou arrière 15', sera traversé par des canaux de circulation de fluide, de telle sorte que seuls les chignons 13 dépassant à l'avant, ou à l'arrière, du stator 11 et/ou les bobinages 16 entourant les branches radiales du flasque de bobinage avant 15, ou arrière 15', seront refroidis par le fluide de refroidissement.

Une configuration particulière du flasque de bobinage avant 15 et de son couvercle avant 22 associé est représentée sur les figures 7 à 10. Le flasque de bobinage arrière 15' possédant une structure sensiblement identique à celle du flasque de bobinage avant 15, les détails techniques donnés ci-dessous s'appliqueront de manière similaire au flasque de bobinage arrière 15' et à son couvercle arrière associé.

Le flasque de bobinage avant 15 se présente sensiblement sous la forme d'une struture en forme d'étoile comprenant une partie centrale 156 de forme hexagonale prolongée sur chacun de ses côtés par les branches radiales 151 en forme de T. La partie centrale 156 possède une zone centrale 157 évidée, qui est configurée pour loger partiellement l'arbre 12 du rotor.

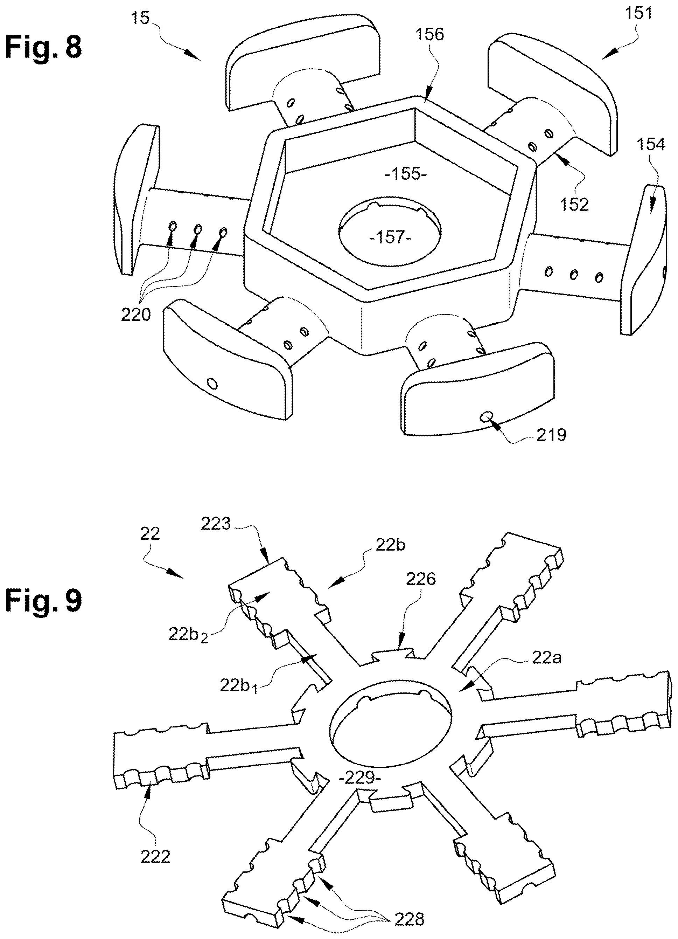

Le flasque de bobinage avant 15 possède une face latérale interne 153 (visible sur la figure 7) et une face latérale externe 155 (visible sur la figure 8). La face latérale interne 153 est en contact avec la face latérale avant 143 du paquet de tôles 14 et la face latérale externe 155 est orientée vers le palier avant 2.

La face latérale externe 155 est configurée pour définir entre la section élargie 154 de chaque branche radiale 151 et la partie centrale 156 un espace radial permettant de loger les bobinages 16.

La face latérale interne 153, majoritairement plane, est munie d'une cavité centrale 21 qui s'étend radialement depuis la zone centrale 157 en direction des faces périphériques externes 158 du flasque de bobinage avant 15, qui sont définies par les côtés extérieurs courbes des sections élargies 154 des branches radiales 151.

La cavité 21 comprend notamment une partie centrale 21a de forme annulaire, qui jouxte la zone centrale 157, et de plusieurs extensions radiales 21b s'étendant radialement depuis ladite partie centrale 21a. Chacune des extensions radiales 21b est alignée avec une des branches radiales 151 du flasque de bobinage avant 15 et comprend une portion étroite 21b1 prolongée radialement par une portion élargie 21b2.

La cavité 21 est notamment délimitée par une paroi de fond 211, par plusieurs parois latérales 212 orientées radialement par rapport à l'axe X, et par plusieurs parois latérales 213 orientées orthoradialement par rapport à l'axe X.

La paroi de fond 211 est munie de premières rainures 214 orientées radialement par rapport à l'axe X et de deuxièmes rainures 215 orientées de manière orthoradiale par rapport à l'axe X. Les parois latérales 212 sont, quant à elles, munies de troisièmes rainures 218 orientées parallèlement à l'axe X, chacune des troisièmes rainures 218 débouchant sur une ouverture axiale de sortie de fluide 220 située sur la face latérale externe 155 du flasque de bobinage 15, au niveau de l'espace radial qui sert de logement aux bobinages 16.

Dans la configuration représentée, les premières rainures 214 sont au nombre de 6, chacune des premières rainures 214 étant formée à travers la partie centrale 21a et les portions étroite et élargie d'une des extensions radiales 21b et s'étendant depuis une première extrémité jouxtant la zone centrale 157 jusqu'à une deuxième extrémité située au niveau d'une des parois latérales 213 de la cavité 21. Cette deuxième extrémité débouche sur une ouverture traversante 217 (représentée en traits pointillés sur la figure 7) formée à travers la section élargie 154 d'une des branches radiales 151. Cette ouverture traversante 217 débouche à l'extérieur du flasque de bobinage 15 au niveau d'une ouverture radiale de sortie de fluide 219 qui est orientée vers les chignons 13 du stator 11.

Dans la configuration représentée, les deuxièmes rainures 215 sont au nombre de 36, chacune des deuxièmes rainures 215 étant formée à travers la portion élargie 21b2 d'une des extensions radiales 21b et s'étendant depuis une première extrémité jouxtant une des premières rainures 214 jusqu'à une deuxième extrémité située au niveau d'une des parois latérales 212 de la cavité 21. Cette deuxième extrémité débouche sur une des troisièmes rainures 218.

Les premières, deuxièmes et troisièmes rainures 214, 215 et 218 sont configurées pour former, en combinaison avec des rainures correspondantes du couvercle avant 22, des canaux de circulation de fluide à l'intérieur du flasque de bobinage avant 15.

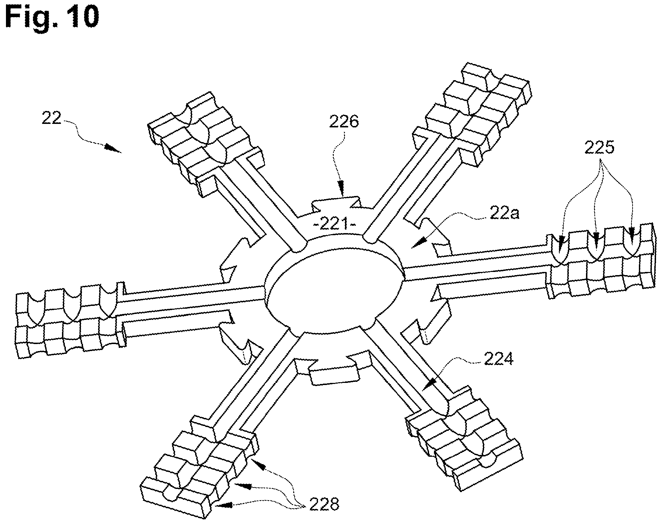

A cet effet, et comme représenté sur les figures 9 et 10, le couvercle 22 possède une forme complémentaire à la cavité 21 du flasque de bobinage 15.

Le couvercle 22 comprend notamment une partie centrale 22a de forme annulaire destinée à s'emboiter à l'intérieur de la partie centrale 21a de la cavité 21. De manière à sécuriser le couplage du couvercle 22 sur le flasque de bobinage 15, le couvercle 22 est avantageusement muni de nervures 226 en queue d'aronde formant des saillies à la périphérie externe de la partie centrale 22a du couvercle 22, lesdites nervures 226 possédant une forme complémentaire à celle de formes en creux 216 correspondantes du flasque de bobinage 15 (voir figure 7), chacune desdites formes en creux 216 étant destinée à loger une desdites nervures 226.

Le couvercle 22 comprend également plusieurs extensions radiales 22b s'étendant radialement depuis la partie centrale 22a. Chacune des extensions radiales 22b comprend une portion étroite 22b1 prolongée radialement par une portion élargie 22b2. Les extensions radiales 22b sont destinées à venir s'emboîter à l'intérieur des extensions radiales 21b de la cavité 21.

Le couvercle 22 est notamment délimité par une paroi interne 221, qui est en contact avec la paroi de fond 211 de la cavité 21, par une paroi externe 229, qui est opposée à la paroi interne 221, par plusieurs parois latérales 222, qui sont en contact avec les parois latérales 212 de la cavité 21, et par plusieurs parois latérales 223, qui sont en contact avec les parois latérales 213 de la cavité 21.

La paroi interne 221 est munie de premières rainures 224 orientées radialement par rapport à l'axe X et formant, en combinaison avec les premières rainures 214 de la cavité 21, des premières sections de canaux radiaux de sortie de fluide pour le flasque de bobinage avant 15. Chacune desdites premières sections débouche, à son extrémité distale, sur une des ouvertures traversantes 217 du flasque de bobinage 15, lesquelles forment des deuxièmes sections desdits canaux radiaux de sortie de fluide. Par ailleurs, chacune desdites premières sections débouche, à son extrémité proximale, sur un trou traversant 125 formé à l'intérieur de l'arbre 12 et orienté radialement par rapport à l'axe X (voir figure 5a), ledit trou 125 étant formé à l'intérieur de la portion d'extrémité avant 121 de manière à déboucher, d'un côté, dans le premier canal d'entrée de fluide 124 et, de l'autre côté, au niveau de la paroi périphérique de l'arbre 12. De manière similaire, plusieurs trous 127 orientés radialement par rapport à l'axe X de l'arbre 12 sont formés à l'intérieur de la portion d''extrémité arrière 123 de manière à déboucher, d'un côté, dans le deuxième canal d'entrée de fluide 126 et, de l'autre côté, au niveau de la paroi périphérique de l'arbre. Ces trous 125, 127 permettront d'alimenter en fluide les canaux radiaux de sortie de fluide des flasques de bobinage avant et arrière 15, 15' respectivement.

La paroi interne 221 est également munie de deuxièmes rainures 225 orientées de manière orthoradiale par rapport à l'axe X et formant, en combinaison avec les deuxièmes rainures 215 de la cavité 21, des canaux intermédiaires de circulation de fluide pour le flasque de bobinage avant 15, lesdits canaux intermédiaires de circulation de fluide étant en communication fluidique avec les canaux radiaux de sortie de fluide. Ces canaux intermédiaires de circulation de fluide sont alimentés en fluide par les premières sections des canaux radiaux d'entrée de fluide constitués par les rainures 214 et 224.

Les parois latérales 222 du couvercle 22 sont, quant à elles, munies de troisièmes rainures 228 orientées parallèlement à l'axe X et formant, en combinaison avec les troisièmes rainures 218 de la cavité 21, des canaux axiaux de sortie de fluide pour le flasque de bobinage avant 15, lesdits canaux axiaux de sortie de fluide étant en communication fluidique avec les canaux intermédiaires de circulation de fluide. Chacun des canaux axiaux de sortie de fluide débouche ainsi sur l'ouverture axiale de sortie de fluide 220 située sur la face latérale externe 155 du flasque de bobinage 15.

Ainsi configurés, le rotor 10 et le moteur 1 pourront être refroidis par un fluide de refroidissement, comme de l'huile ou de l'air sous pression par exemple, ledit fluide de refroidissement circulant dans le rotor 10 successivement au travers du premier canal d'entrée de fluide 124 et/ou du deuxième canal d'entrée de fluide 126, puis à l'intérieur des flasques de bobinage avant et/ou arrière 15, 15' au travers des canaux radiaux de sortie de fluide, des canaux intermédiaires de circulation de fluide et/ou des canaux axiaux de sortie de fluide, pour finalement être expulsé hors du rotor 10 au travers des ouvertures radiales de sortie de fluide 219 et/ou des ouvertures axiales de sortie de fluide 220. Par la suite, ce fluide de refroidissement est dirigé vers les chignons 13 et/ou vers les bobinages 16 de telle sorte que, une fois au contact des chignons 13 et/ou des bobinages 16, il peut extraire une partie de la chaleur emmagasinée dans lesdits chignons 13 et/ou par lesdits bobinages 16. Le fluide de refroidissement circule ensuite, sous l'effet de la gravité, dans la partie basse du carter avant d'être évacué via les ouvertures 7.

L'invention n'est évidemment pas limitée aux modes de réalisation tels que décrits précédemment. Par ailleurs, la présence d'un couvercle 22 logé à l'intérieur d'une cavité centrale 21 du flasque de bobinage avant 15, respectivement arrière 15', n'est qu'une possibilité pour former les canaux de circulation de fluide. Dans d'autres modes de réalisation de l'invention, il est envisageable de ne pas prévoir un tel couvercle et une telle cavité.

## Revendications

1. Rotor (10) bobiné pour moteur électrique (1) comprenant :
- un arbre (12) de rotor monté rotatif autour d'un axe (X);
- un paquet de tôles (14) monté coaxialement sur l'arbre (12) de rotor, ledit paquet de tôles (14) s'étendant entre une face latérale avant (143) et une face latérale arrière (144) et présentant une alternance de pôles (141) et d'espaces interpolaires (142);
- un flasque de bobinage avant (15) et un flasque de bobinage arrière (15') montés coaxialement sur l'arbre (12) de rotor et agencés axialement de part et d'autre du paquet de tôles (14) de telle sorte à être contigus respectivement aux faces latérales avant et arrière (143, 144) du paquet de tôles (14), lesdits flasques de bobinage avant et arrière (15, 15') présentant chacun une série de branches radiales (151) en forme de T, chacune desdites branches radiales (151) étant alignée axialement avec un des pôles (141) du paquet de tôles (14) et présentant, de préférence, un profil similaire ou identique à celui dudit pôle (141) dans un plan perpendiculaire à l'axe (X) de l'arbre;
- des bobinages (16) entourant partiellement les pôles (141) du paquet de tôles (14) et les branches radiales (151) des flasques de bobinage avant et arrière (15, 15');
dans lequel l'arbre (12) est muni d'au moins un canal interne (124) de circulation d'un fluide de refroidissement, dit canal d'entrée de fluide, et en ce que le flasque de bobinage avant (15) et/ou le flasque de bobinage arrière (15') est traversé par plusieurs canaux radiaux de sortie de fluide (214, 224, 217) orientés radialement par rapport à l'axe (X) de l'arbre et à l'intérieur desquels peut circuler un fluide de refroidissement, chacun desdits canaux radiaux de sortie de fluide (214, 224, 217) étant en communication fluidique avec ledit canal d'entrée de fluide (124) et débouchant au niveau d'une ouverture radiale de sortie de fluide (219) située à la périphérie externe (158) dudit flasque de bobinage avant (15) et/ou dudit flasque de bobinage arrière (15'),
**caractérisé en ce que** le flasque de bobinage avant (15), respectivement arrière (15'), est traversé également par une pluralité de canaux intermédiaires (215, 225), chacun desdits canaux intermédiaires (215, 225) étant orienté orthogonalement à l'un des canaux radiaux de sortie de fluide (214, 224) et débouchant, à une première extrémité, dans ledit canal radial de sortie de fluide (214, 224) et, à une deuxième extrémité, dans un canal axial de sortie de fluide (218, 228) débouchant au niveau d'une ouverture axiale de sortie de fluide (220) située sur une face latérale externe (155) dudit flasque de bobinage avant (15), respectivement arrière (15').

2. Rotor (10) bobiné selon la revendication 1, **caractérisé en ce que** l'arbre (12) est muni d'un premier canal interne (124) de circulation d'un fluide de refroidissement, dit premier canal d'entrée de fluide, et d'un deuxième canal interne de circulation d'un fluide de refroidissement, dit deuxième canal d'entrée de fluide, et **en ce que** le flasque de bobinage avant (15), respectivement le flasque de bobinage arrière (15'), est traversé par plusieurs canaux radiaux de sortie de fluide (214, 224, 217) orientés radialement par rapport à l'axe (X) de l'arbre et à l'intérieur desquels peut circuler un fluide de refroidissement, chacun desdits canaux radiaux de sortie de fluide (214, 224, 217) étant en communication fluidique avec le premier canal d'entrée de fluide (124), respectivement le deuxième canal d'entrée de fluide (126), et débouchant au niveau d'une ouverture radiale de sortie de fluide (219) située à la périphérie externe (158) dudit flasque de bobinage avant (15), respectivement dudit flasque de bobinage arrière (15').

3. Rotor (10) bobiné selon la revendication 2, **caractérisé en ce que** l'arbre (12) comprend une portion d'extrémité avant (121) et une portion d'extrémité arrière (123) séparée de la portion d'extrémité avant (121) par une portion centrale (122), la portion d'extrémité avant (121), respectivement la portion d'extrémité arrière (122), étant traversée par un trou borgne (124, 126) aligné selon l'axe (X) de l'arbre (12), ledit trou borgne formant le premier canal d'entrée de fluide (124), respectivement le deuxième canal d'entrée de fluide (126).

4. Rotor (10) bobiné selon la revendication 1, **caractérisé en ce que** l'arbre (12) comprend une portion d'extrémité avant (121) et une portion d'extrémité arrière (123) séparée de la portion d'extrémité avant (121) par une portion centrale (122), la portion centrale (122) et au moins partiellement les portions d'extrémité avant (121) et arrière (123) étant traversées par un trou borgne (124) aligné selon l'axe (X) de l'arbre (12), ledit trou borgne formant le canal d'entrée de fluide (124).

5. Rotor (10) bobiné selon la revendication 3 ou 4, **caractérisé en ce que** plusieurs trous de liaison (125) orientés radialement par rapport à l'axe (X) de l'arbre sont formés à l'intérieur de la portion d'extrémité avant (121), respectivement de la portion d'extrémité arrière (123), de manière à déboucher, d'un côté, dans le canal d'entrée de fluide (124), ou respectivement dans les premier et deuxième canaux d'entrée de fluide (126), et, de l'autre côté, dans les canaux radiaux de sortie de fluide (214, 224).

6. Rotor (10) bobiné selon l'une des revendications précédentes, **caractérisé en ce que** chacun des canaux radiaux de sortie de fluide (214, 224, 217) traverse une des branches radiales (151) du flasque de bobinage avant (15), respectivement arrière (15').

7. Rotor (10) bobiné selon l'une des revendications précédentes, **caractérisé en ce que** le flasque de bobinage avant (15), respectivement arrière (15'), possède une face latérale interne (153) en contact avec la face latérale avant (143), respectivement arrière (144), du paquet de tôles (14), ladite face latérale interne (153) étant munie d'une cavité (21) dans laquelle vient se loger un couvercle (22), ladite cavité (21) étant configurée pour former, en combinaison avec ledit couvercle (22), une première section (214, 224) des canaux radiaux de sortie de fluide, ainsi que les canaux intermédiaires (215, 225) et les canaux axiaux de sortie de fluide (218, 228).

8. Rotor (10) bobiné selon la revendication 7, **caractérisé en ce que** la cavité (21) comprend une partie centrale (21a) de forme annulaire, qui s'étend radialement depuis une zone centrale (157) évidée du flasque de bobinage avant (15), respectivement arrière (15'), ladite zone centrale (157) étant configurée pour loger partiellement l'arbre (12) du rotor, et de plusieurs extensions radiales (21b) s'étendant radialement depuis ladite partie centrale (21a), chacune des extensions radiales (21b) étant alignée avec une des branches radiales (151) du flasque de bobinage avant (15), respectivement arrière (15').

9. Rotor (10) bobiné selon la revendication 8, **caractérisé en ce que** la cavité (21) est délimitée par une paroi de fond (211) et par plusieurs parois latérales (212, 213) orientées perpendiculairement à ladite paroi de fond (211), ladite paroi de fond (211) étant munie de premières rainures (214) orientées radialement par rapport à l'axe (X) de l'arbre et de deuxièmes rainures (215) orientées de manière orthoradiale par rapport à l'axe (X) de l'arbre, lesdites premières et deuxièmes rainures (214, 215) formant respectivement, en combinaison avec des rainures (224, 225) correspondantes du couvercle (22), la première section (214, 224) des canaux radiaux de sortie de fluide et les canaux intermédiaires (215, 225).

10. Rotor (10) bobiné selon la revendication 9, **caractérisé en ce que** plusieurs parois latérales (212), qui sont orientées radialement par rapport à l'axe (X) de l'arbre, sont munies de troisièmes rainures (218) orientées parallèlement à l'axe (X) de l'arbre, lesdites troisièmes rainures (218) formant, en combinaison avec des rainures (228) correspondantes du couvercle (22), les canaux axiaux de sortie de fluide (218, 228).

11. Rotor (10) bobiné selon l'une des revendications 8 à 10, **caractérisé en ce que** la cavité (21) est configurée pour former des logements (216) disposés radialement autour de la partie centrale (21a), chacun des logements (216) possédant une forme spécifique et étant destiné à recevoir un élément de liaison (226) correspondant du couvercle (22) possédant une forme complémentaire à celle dudit logement (216), ladite forme spécifique et ladite forme complémentaire étant configurées pour empêcher tout déplacement relatif entre le couvercle (22) et le flasque de bobinage avant (15), respectivement arrière (15'), selon une direction radiale, sécurisant ainsi le couplage du couvercle (22) sur le flasque de bobinage avant (15), respectivement arrière (15').

12. Rotor (10) bobiné selon la revendication 11, **caractérisé en ce que** les logements (216) de la cavité (21) possèdent une forme en queue d'aronde.

13. Rotor (10) bobiné selon l'une des revendications précédentes, **caractérisé en ce que** les flasques de bobinage avant et arrière (15, 15') sont constitués d'un matériau choisi parmi l'aluminium ou une matière plastique.

14. Moteur électrique (1) comprenant un rotor (10) bobiné selon l'une des revendications précédentes et un stator (11) annulaire qui entoure le rotor (10) de manière coaxiale à l'arbre (12), des chignons (13) faisant saillie axialement de part et d'autre du stator (11), **caractérisé en ce que** les ouvertures radiales de sortie de fluide (219), à travers lesquelles sort le fluide de refroidissement des flasques de bobinage avant et/ou arrière (15, 15'), sont alignées axialement avec les chignons (13) de manière à permettre un refroidissement desdits chignons (13) par l'intermédiaire dudit fluide de refroidissement.

## Patentansprüche

1. Gewickelter Rotor (10) für Elektromotor (1), umfassend Folgendes:
- eine Rotorwelle (12), die um eine Achse (X) drehbar montiert ist;
- ein koaxial auf der Rotorwelle (12) montiertes Blechpaket (14); wobei sich das Blechpaket (14) zwischen einer vorderen Seitenfläche (143) und einer hinteren Seitenfläche (144) erstreckt und einen Polwechsel (141) und Polzwischenräume (142) aufweist,
- einen vorderen Wickelflansch (15) und einen hinteren Wickelflansch (15'), die koaxial auf der Rotorwelle (12) montiert und axial auf beiden Seiten des Blechpakets (14) angeordnet sind, so dass sie jeweils an den vorderen und hinteren Seitenflächen (143, 144) des Blechpakets (14) anliegen, wobei die vorderen und hinteren Wickelflansche (15, 15') jeweils eine Reihe von radialen T-förmigen Schenkeln (151) aufweisen, wobei jeder der radialen Schenkel (151) axial mit einem der Pole (141) des Blechpakets (14) ausgerichtet ist und vorzugsweise ein ähnliches oder identisches Profil wie das des Pols (141) in einer zu der Achse (X) der Welle senkrechten Ebene aufweist;
- Wicklungen (16), die die Pole (141) des Blechpakets (14) und die radialen Schenkel (151) der vorderen und hinteren Wickelflansche (15, 15') teilweise umgeben;
wobei die Welle (12) mit mindestens einem inneren Kanal (124) für die Zirkulation eines Kühlfluids, dem Fluideintrittskanal, versehen ist, und wobei der vordere Wickelflansch (15) und/oder der hintere Wickelflansch (15') von mehreren radial zu der Achse (X) ausgerichteten radialen Fluidaustrittskanälen (214, 224, 217) der Welle durchquert wird und innerhalb derer ein Kühlfluid zirkulieren kann, wobei jeder der radialen Fluidaustrittskanäle (214, 224, 217) in fluidischer Kommunikation mit dem Fluideintrittskanal (124) steht und an einer radialen Fluidaustrittsöffnung (219) ausläuft, die sich an dem äußeren Umfang (158) des vorderen Wickelflansches (15) und/oder des hinteren Wickelflansches (15') befindet,
**dadurch gekennzeichnet, dass** der vordere (15) beziehungsweise hintere (15') Wickelflansch ebenfalls von einer Vielzahl von Zwischenkanälen (215, 225) durchquert wird, wobei jeder der Zwischenkanäle (215, 225) orthogonal zu einem der radialen Fluidaustrittskanäle (214, 224) ausgerichtet ist und an einem ersten Ende ausläuft, in den radialen Fluidaustrittskanal (214, 224) und, an einem zweiten Ende, in einen axialen Fluidaustrittskanal (218, 228) an einer axialen Fluidaustrittsöffnung (220) an einer äußeren Seitenfläche (155) des vorderen (15) beziehungsweise hinteren (15') Wickelflansches auslaufend.

2. Gewickelter Rotor (10) nach Anspruch 1, **dadurch gekennzeichnet, dass** die Welle (12) mit einem ersten inneren Kanal (124) für die Zirkulation eines Kühlfluids, dem ersten Fluideintrittskanal, und einem zweiten inneren Kanal für die Zirkulation eines Kühlfluids, dem zweiten Fluideintrittskanal, versehen ist, und dass der vordere Wickelflansch (15) beziehungsweise der hintere Wickelflansch (15') von mehreren radialen Fluidaustrittskanälen (214, 224, 217) durchquert wird, die radial zu der Achse (X) der Welle ausgerichtet sind und innerhalb derer ein Kühlfluid zirkulieren kann, wobei jeder der radialen Fluidaustrittskanäle (214, 224, 217) in fluidischer Kommunikation mit dem ersten Fluideintrittskanal (124) beziehungsweise dem zweiten Fluideintrittskanal (126) steht und an einer radialen Fluidaustrittsöffnung (219) an der äußeren Peripherie (158) des vorderen Wickelflansches (15) beziehungsweise des hinteren Wickelflansches (15') ausläuft.

3. Gewickelter Rotor (10) nach Anspruch 2, **dadurch gekennzeichnet, dass** die Welle (12) einen vorderen Endabschnitt (121) und einen hinteren Endabschnitt (123) umfasst, der durch einen mittleren Abschnitt (122) von dem vorderen Endabschnitt (121) getrennt ist, wobei der vordere Endabschnitt (121) beziehungsweise der hintere Endabschnitt (122) von einem entlang der Achse (X) der Welle (12) ausgerichteten Sackloch (124, 126) durchquert wird, wobei das Sackloch den ersten Fluideintrittskanal (124) beziehungsweise den zweiten Fluideintrittskanal (126) bildet.

4. Gewickelter Rotor (10) nach Anspruch 1, **dadurch gekennzeichnet, dass** die Welle (12) einen vorderen Endabschnitt (121) und einen hinteren Endabschnitt (123) umfasst, die von dem vorderen Endabschnitt (121) durch einen mittleren Abschnitt (122) getrennt sind, wobei der mittlere Abschnitt (122) und mindestens teilweise die vorderen (121) und hinteren Endabschnitte (123) von einem entlang der Achse (X) der Welle (12) ausgerichteten Sackloch (124) durchquert werden, wobei das Sackloch den Fluideintrittskanal (124) bildet.

5. Gewickelter Rotor (10) nach Anspruch 3 oder 4, **dadurch gekennzeichnet, dass** mehrere radial zu der Achse (X) der Welle ausgerichtete Verbindungslöcher (125) innerhalb des vorderen Endabschnitts (121) beziehungsweise des hinteren Endabschnitts (123) ausgebildet sind, sodass sie auf der einen Seite in den Fluideintrittskanal (124) beziehungsweise in den ersten und zweiten Fluideintrittskanal (126) und auf der anderen Seite in den radialen Fluidaustrittskanälen (214, 224) auslaufen.

6. Gewickelter Rotor (10) nach einem der vorhergehenden Ansprüche, **dadurch gekennzeichnet, dass** jeder der radialen Fluidaustrittskanäle (214, 224, 217) einen der radialen Schenkel (151) des vorderen (15) beziehungsweise hinteren (15') Wickelflansches durchquert.

7. Gewickelter Rotor (10) nach einem der vorhergehenden Ansprüche, **dadurch gekennzeichnet, dass** der vordere (15) beziehungsweise hintere (15') Wickelflansch eine mit der vorderen (143), beziehungsweise hinteren (144), Seitenfläche berührende innere (153) Seitenfläche des Blechpakets (14) besitzt, wobei die innere Seitenfläche (153) mit einem Hohlraum (21) versehen ist, in dem ein Deckel (22) untergebracht wird, wobei der Hohlraum (21) so eingerichtet ist, dass er in Kombination mit dem Deckel (22) einen ersten Abschnitt (214, 224) der radialen Fluidaustrittskanäle sowie die Zwischenkanäle (215, 225) und die axialen Fluidaustrittskanäle (218, 228) bildet.

8. Gewickelter Rotor (10) nach Anspruch 7, **dadurch gekennzeichnet, dass** der Hohlraum (21) einen ringförmigen Mittelteil (21a) umfasst, der sich radial von einem ausgehöhlten Mittelbereich (157) des vorderen (15) beziehungsweise hinteren (15') Wickelflansches erstreckt, wobei der Mittelbereich (157) so eingerichtet ist, dass er die Welle (12) des Rotors teilweise aufnimmt, und mehrere radiale Verlängerungen (21b), die sich radial von dem Mittelteil (21a) aus erstrecken, wobei jede der radialen Verlängerungen (21b) mit einem der radialen Schenkel (151) des vorderen (15) beziehungsweise hinteren (15') Wickelflansches ausgerichtet ist.

9. Gewickelter Rotor (10) nach Anspruch 8, **dadurch gekennzeichnet, dass** der Hohlraum (21) durch eine Bodenwand (211) und durch mehrere Seitenwände (212, 213) begrenzt ist, die senkrecht zu der Bodenwand (211) ausgerichtet sind, wobei die Bodenwand (211) mit ersten radial zu der Achse (X) der Welle ausgerichteten Nuten (214) und zweiten Nuten (215), die orthoradial zu der Achse (X) der Welle ausgerichtet sind, versehen ist, wobei die ersten und zweiten Nuten (214, 215) in Kombination mit Nuten (224, 225) des Deckels (22), den ersten Abschnitt (214, 224) der Fluidaustrittskanäle und der Zwischenkanäle (215, 225) bilden.

10. Gewickelter Rotor (10) nach Anspruch 9, **dadurch gekennzeichnet, dass** mehrere Seitenwände (212), die radial zu der Achse (X) der Welle ausgerichtet sind, mit dritten Nuten (218) versehen sind, die parallel zu der Achse (X) der Welle ausgerichtet sind, wobei die dritten Nuten (218) in Kombination mit entsprechenden Nuten (228) des Deckels (22) mindestens einen Teil der dritten Abschnitte (218, 228) der vorderen beziehungsweise hinteren Verbindungskanäle bilden.

11. Gewickelter Rotor (10) nach einem der Ansprüche 8 bis 10, **dadurch gekennzeichnet, dass** der Hohlraum (21) so eingerichtet ist, dass er radial um den Mittelteil (21a) angeordnete Gehäuse (216) bildet, wobei jedes der Gehäuse (216) eine spezifische Form aufweist und dazu bestimmt ist, ein entsprechendes Verbindungselement (226) des Deckels (22) aufzunehmen, das eine Form aufweist, die zu der des Gehäuses (216) komplementär ist, wobei die spezifische Form und die ergänzende Form so eingerichtet sind, dass sie eine relative Bewegung zwischen dem Deckel (22) und dem vorderen (15) beziehungsweise hinteren Wickelflansch (15') in radialer Richtung verhindern, wodurch die Kopplung des Deckels (22) mit dem vorderen (15) beziehungsweise hinteren Wickelflansch (15') gesichert wird.

12. Gewickelter Rotor (10) nach Anspruch 11, **dadurch gekennzeichnet, dass** die Gehäuse (216) des Hohlraums (21) eine Schwalbenschwanzform aufweisen.

13. Gewickelter Rotor (10) nach einem der vorhergehenden Ansprüche, **dadurch gekennzeichnet, dass** die vorderen und hinteren Wickelflansche (15, 15') aus einem Material bestehen, das aus Aluminium oder einem Kunststoff ausgewählt ist.

14. Elektromotor (1), umfassend einen gewickelten Rotor (10) nach einem der vorhergehenden Ansprüche und einen ringförmigen Stator (11), der den Rotor (10) koaxial zu der Welle (12) umgibt, wobei die Keile (13) axial auf beiden Seiten des Stators (11) vorstehen, **dadurch gekennzeichnet, dass** die radialen Fluidaustrittsöffnungen (219), durch die das Kühlfluid aus den vorderen und/oder hinteren Wickelflanschen (15, 15') austritt, axial mit den Keilen (13) ausgerichtet sind so, dass eine Kühlung der Keile (13) durch das Kühlfluid ermöglicht wird.

## Claims

1. A wound rotor (10) for electric motor (1) comprising:
- a rotor shaft (12) rotary mounted about an axis (X);
- a stack of laminations (14) mounted coaxially on the rotor shaft (12), said stack of laminations (14) extending between a front lateral face (143) and a rear lateral face (144) and having an alternation of poles (141) and interpolar spaces (142);
- a front winding flange (15) and a rear winding flange (15') mounted coaxially on the rotor shaft (12) and arranged axially on either side of the stack of laminations (14) so as to be contiguous respectively to the front and rear lateral faces (143, 144) of the stack of laminations (14), said front and rear winding flanges (15, 15') each having a series of radial branches (151) in the shape of a T, each of said radial branches (151) being aligned axially with one of the poles (141) of the stack of laminations (14) and preferably having a profile similar or identical to that of said pole (141) in a plane perpendicular to the axis (X) of the shaft;
- windings (16) partially surrounding the poles (141) of the stack of laminations (14) and the radial branches (151) of the front and rear winding flanges (15, 15');
in which the shaft (12) is provided with at least one internal channel (124) for circulating a cooling fluid, called a fluid inlet channel, and in that the front winding flange (15) and/or the rear winding flange (15') is crossed by several radial fluid outlet channels (214, 224, 217) oriented radially relative to the axis (X) of the shaft and inside which can circulate a cooling fluid, each of said radial fluid outlet channels (214, 224, 217) being in fluid communication with said fluid inlet channel (124) and opening at a radial fluid outlet opening (219) located at the external periphery (158) of said front winding flange (15) and/or said rear winding flange (15'),
**characterized in that** the front (15), respectively rear (15') winding flange, is also crossed by a plurality of intermediate channels (215, 225), each of said intermediate channels (215, 225) being orthogonally oriented to one of the radial fluid outlet channels (214, 224) and opening, at a first end, into said radial fluid outlet channel (214, 224) and, at a second end, into an axial fluid outlet channel (218, 228) opening at the level of an axial fluid outlet opening (220) located on an external lateral face (155) of said front (15), respectively rear (15') winding flange.

2. The wound rotor (10) according to claim 1, **characterized in that** the shaft (12) is provided with a first internal channel (124) for circulating a cooling fluid, called first fluid inlet channel, and a second internal channel for circulating a cooling fluid, called second fluid inlet channel, and **in that** the front winding flange (15), respectively the rear winding flange (15'), is crossed by several radial fluid outlet channels (214, 224, 217) oriented radially relative to the axis (X) of the shaft and inside which a cooling fluid can circulate, each of said radial fluid outlet channels (214, 224, 217) being in fluid communication with the first fluid inlet channel (124), respectively the second fluid inlet channel (126), and opening at a radial fluid outlet opening (219) located at the external periphery (158) of said front winding flange (15), respectively of said rear winding flange (15').

3. The wound rotor (10) according to claim 2, **characterized in that** the shaft (12) comprises a front end portion (121) and a rear end portion (123) separated from the front end portion (121) by a central portion (122), the front end portion (121), respectively the rear end portion (122), being crossed by a blind hole (124, 126) aligned along the axis (X) of the shaft (12), said blind hole forming the first fluid inlet channel (124), respectively the second fluid inlet channel (126).

4. The wound rotor (10) according to claim 1, **characterized in that** the shaft (12) comprises a front end portion (121) and a rear end portion (123) separated from the front end portion (121) by a central portion (122), the central portion (122) and at least partially the front (121) and rear (123) end portions being crossed by a blind hole (124) aligned along the axis (X) of the shaft (12), said blind hole forming the fluid inlet channel (124).

5. The wound rotor (10) according to claim 3 or 4, **characterized in that** several connecting holes (125) oriented radially relative to the axis (X) of the shaft are formed inside the front end portion (121), respectively the rear end portion (123), so as to open, on one side, into the fluid inlet channel (124), or respectively into the first and second fluid inlet channels (126), and, on the other side, in the radial fluid outlet channels (214, 224).

6. The wound rotor (10) according to any of the preceding claims, **characterized in that** each of the radial fluid outlet channels (214, 224, 217) passes through one of the radial branches (151) of the front (15), respectively rear (15') winding flange.

7. The wound rotor (10) according to any of the preceding claims, **characterized in that** the front (15), respectively rear (15') winding flange, has an internal lateral face (153) in contact with the front (143), respectively rear (144) lateral face, of the stack of laminations (14), said internal lateral face (153) being provided with a cavity (21) in which a cover (22) is housed, said cavity (21) being configured to form, in combination with said cover (22), a first section (214, 224) of the radial fluid outlet channels, as well as the intermediate channels (215, 225) and the axial fluid outlet channels (218, 228).

8. The wound rotor (10) according to claim 7, **characterized in that** the cavity (21) comprises a central part (21a) of annular shape, which extends radially from a hollowed central zone (157) of the front (15), respectively rear (15') winding flange, said central zone (157) being configured to partially house the shaft (12) of the rotor, and several radial extensions (21b) extending radially from said central part (21a), each of the radial extensions (21b) being aligned with one of the radial branches (151) of the front (15), respectively rear (15') winding flange,

9. The wound rotor (10) according to claim 8, **characterized in that** the cavity (21) is delimited by a bottom wall (211) and by several lateral walls (212, 213) oriented perpendicular to said bottom wall (211), said bottom wall (211) being provided with first grooves (214) oriented radially relative to the axis (X) of the shaft and second grooves (215) oriented orthoradially relative to the axis (X) of the shaft, said first and second grooves (214, 215) forming respectively, in combination with corresponding grooves (224, 225) to the cover (22), the first section (214, 224) of the radial fluid outlet channels and the intermediate channels (215, 225).

10. The wound rotor (10) according to claim 9, **characterized in that** several lateral walls (212), which are oriented radially relative to the axis (X) of the shaft, are provided with third grooves (218) oriented parallel to the axis (X) of the shaft, said third grooves (218) forming, in combination with corresponding grooves (228) of the cover (22), the axial fluid outlet channels (218, 228).

11. The wound rotor (10) according to any of claims 8 to 10, **characterized in that** the cavity (21) is configured to form housings (216) arranged radially about the central part (21a), each of the housings (216) having a specific shape and being intended to receive a connecting element (226) corresponding to the cover (22) having a shape complementary to that of said housing (216), said specific shape and said complementary shape being configured to prevent any relative movement between the cover (22) and the front (15), respectively rear (15') winding flange, in a radial direction, thus securing the coupling of the cover (22) on the front (15), respectively rear (15') winding flange.

12. The wound rotor (10) according to claim 11, **characterized in that** the housings (216) of the cavity (21) have a dovetail shape.

13. The wound rotor (10) according to any of the preceding claims, **characterized in that** the front and rear winding flanges (15, 15') are made of a material selected from aluminum or a plastic material.

14. An electric motor (1) comprising a wound rotor (10) according to any of the preceding claims and an annular stator (11) which surrounds the rotor (10) coaxially with the shaft (12), winding heads (13) projecting axially from either side of the stator (11), **characterized in that** the radial fluid outlet openings (219), through which the cooling fluid exits the front and/or rear winding flanges (15, 15'), are aligned axially with the winding heads (13) so as to allow a cooling of said winding heads (13) via said cooling fluid.
